# EUROPÄISCHE PATENTANMELDUNG

(11) **EP 1 657 547 A1**
(43) Veröffentlichungstag der Anmeldung: **17.05.2006**
(21) Anmeldenummer: 06002703.4
(22) Anmeldetag: 07.03.2000
(51) Int. Cl.: G01N 30/58

(54) **Annularchromatographie**

(62) Teilanmeldung aus: 00104868.5
(71) Anmelder: PRIOR ENGINEERING AG, 8008 Zürich (CH)
(72) Erfinder: Prior, Adalbert, Dipl.-Ing., 6841 Mäder (AT); Prior, Joachim, 6890 Lustenau (AT); Wolfgang, Jürgen, 6912 Hörbranz (AT)
(74) Vertreter: Bogensberger, Burkhard

(57) **Zusammenfassung**

Die Erfindung bezieht sich auf ein Verfahren zur Reinigung, Trennung und/oder Konzentrierung von Substanzen mittels Flüssigchromatographie unter Verwendung einer Vorrichtung zur kontinuierlichen Annularchromatographie (CAC), wobei als Probenmaterial eine die Substanzen enthaltende Flüssigkeit über den gesamten Umfang eines in einem Zylinderhohlmantel eines Rotationskörpers befindlichen, chromatographischen Trennmediums gleichmässig verteilt aufgebracht wird, mit der Massgabe, dass Flüssigkeiten zum Eluieren der Substanzen und Konditionieren des Trennmediums punktuell an vorbestimmten Winkelpositionen auf das Trennmedium aufgebracht werden und im Bereich dieser Positionen das Eindringen des Probenmaterials in das Trennmedium behindert oder verhindert wird.

## Beschreibung

Die Erfindung betrifft ein Verfahren zur Reinigung, Trennung und/oder Konzentrierung von Substanzen mittels Flüssigchromatographie unter Verwendung einer Vorrichtung zur kontinuierlichen Annularchromatographie (CAC).

Aus WO 99/12625 ist ein Annularchromatograph bekannt, der einen als Gleitring ausgebildeten, stationären Eluatauffangring aufweist, auf welchem ein Rotationskörper mit zylindermantelförmigem Teilchenbett eines Chromatographiegels und integrierter Bodenplatte abdichtend gleitend geführt wird. Dies hat zum Ziel, eine mit dieser Vorrichtung kontinuierlich durchgeführte Annularchromatographie (international als CAC, continuous annular chromatography, abgekürzt) vor Kontamination durch die Umgebung zu schützen und steriles Arbeiten zu ermöglichen. Im Eluatauffangring sind Auffangstellen in Form von Kammern mit Flüssigkeitsableitung angeordnet. In der Bodenplatte sind Kanäle zur Aufnahme der aus dem Teilchenbett der CAC-Säule austretenden Fraktionen und deren Weiterleitung in die Kammern des Eluatauffangringes vorhanden.

Speziell für Trennungen von biologischem oder biochemischem Material bzw. bei Anwendungen für die Aufarbeitung pharmazeutischer Wirkstoffe werden hohe Anforderungen an die kontaminationsfreie Prozessführung der Chromatographie gestellt. Es werden dazu nach aussen geschlossene Systeme gefordert, die sich einfach sterilisieren und zudem für wechselnde Trennaufgaben leicht adaptieren lassen, wobei zu beachten ist, dass die kontaminationsfrei zu führende Vorrichtung aus rotierenden und stationären Teilen besteht. Weiters besteht ein Bedarf nach Vorkehrungen bei der Eluatabnahme, die einen möglichst gleichmässigen Eluat- bzw. Fraktionenablauf aus dem Teilchenbett und den Kammern im Auffangring bei gleichzeitig möglichst hoher Trennschärfe ermöglichen. Ausserdem sollen geeignete Massnahmen ein nachträgliches "Verschleppen" der bereits aufgetrennten Fraktionen in benachbarte Kammern unterbinden.

Gemäss WO 99/12625 wurde der Wunsch nach verbesserter Trennschärfe auf konstruktivem Wege dadurch gelöst, dass die Anzahl an Kanälen in der Bodenplatte und der Kammern im Auffangring auf ein technisch machbares und verfahrensökonomisch sinnvolles Maximum erhöht wurde. Die dabei entstandenen Probleme durch Adhäsions- und Kapillareffekte aufgrund der verringerten Querschnitte der Kanäle in der Bodenplatte und insbesondere der Flüssigkeitsableitungen der Kammern des Auffangringes wurden dadurch gelöst, dass die Durchmesser der Kanäle in der Bodenplatte in radialer Richtung nach oben zum Teilchenbett hin keilförmig erweitert wurden. Um ein mögliches Entstehen von Unterdruck und ein nachfolgendes Ansaugen von unsteriler Fremdluft über die Gleitringdichtung in die Kammern zu verhindern, wurden diese zusätzlich mit Druckausgleichsöffnungen versehen, die für den sterilen Betrieb mit geeigneten Sterilfiltermembranen abgedeckt werden können.

Das unerwünschte Verschleppen von Fraktionsanteilen in benachbarte Kammern des Auffangringes wurde gemäss WO 99/12625 vor allem dadurch reduziert, dass der Durchmesser der Kanäle in der Bodenplatte wesentlich grösser gewählt wurde als die Dicke der Radialwände zwischen den Kammern des Auffangringes. Dadurch wird der Flüssigkeitsstrom, der aus einem Kanal ankommt, beim Gleiten des Kanals über eine Radialwand von dieser wie von einem Scherblatt durchtrennt, wobei die zwischen Kanal und Kammer bestehende und für einen gleichmässigen Flüssigkeitsablauf wichtige Flüssigkeitssäule, die wesentlich dicker ist als die Radialwand zwischen zwei benachbarten Kammern, lediglich partiell, jedoch nie über ihren gesamten Querschnitt unterbrochen wird.

Die vorliegende Erfindung, bezieht sich auf ein Verfahren unter Verwendung einer Vorrichtung zur annularen Chromatographie, insbesondere einer Vorrichtung mit einem stationären Säulenkopf, einem stationären Eluatauffangring, einem dazwischen befindlichen, um eine vertikale Achse drehbaren Rotationskörper in Form eines einen Hohlmantel bildenden Doppelzylinders mit darin enthaltenem chromatographischem Trennmedium, sowie einem mechanischen Antrieb. Dabei ist der Rotationskörper an seinem unteren Ende mit einem Drehteller verbunden, der über durchgehende vertikale Kanäle verfügt und auf einem stationären Eluatauffangring mit Kammern abdichtend gleitend geführt wird, wobei der Drehteller an seiner Unterseite einen Fortsatz aufweist, der mit einer Antriebswelle des Antriebs über eine rasch lösbare Verbindung koppelbar ist. Der stationäre Säulenkopf, der Rotationskörper mit dem Drehteller und der anschliessende Eluatauffangring sind zu einem CAC-Modul verbunden und als Einheit von der Antriebswelle abnehmbar.

Die rotierbaren und die stationären Teile der Vorrichtung bilden eine vom Antrieb unabhängige, durch geeignete Mittel zusammengehaltene Einheit. Um das dauerhafte Zusammenhalten, insbesondere der Gleitdichtung zwischen Rotationskörper und Eluatauffangring, selbst bei Manipulationen wie dem Entfernen vom Antrieb oder beim Transport, zu gewährleisten, können der Rotationskörper und die stationären Teile der Vorrichtung - abgesehen von der Antriebseinheit - in eine Art Käfig, beispielsweise zwischen zwei Platten, eingespannt sein.

Ziel dieser Massnahme ist es, die Chromatographievorrichtung einschliesslich des Rotationskörpers, des stationären Säulenkopfs mit den Anschlüssen für die Flüssigkeitszuleitungen, des Eluatauffangringes, der Flüssigkeitsableitungen aus den Kammern des Eluatauffangringes und gegebenenfalls einschliesslich der Eluatsammelbehälter en bloc vom Antriebsblock entfernbar zu machen, um sie beispielsweise in einem Autoklaven sterilisieren zu können. Die CAC-Vorrichtung enthält vorzugsweise aber auch alle konstruktiven Elemente, die erforderlich sind, um eine Heissdampfsterilisation am Antriebsblock *in situ* durch Durchleiten von gesättigtem Wasserdampf in - vor allem aus der Fermentationstechnik - bekannter Art und Weise durchführen zu können. Für die sterile Prozessführung sind vorzugsweise sowohl die dem Säulenkopf Flüssigkeit zuführenden Leitungen, als auch die von den Kammern des Eluatauffangringes abgehenden Leitungen mit Sterilanschlüssen versehen. Beispielsweise können für die Zuleitungen Standardsterilanschlüsse, wie sie aus der Fermentationstechnik bekannt sind, verwendet werden. Weiters können speziell an den Fugen bzw. Kontaktstellen zwischen Bauteilen des Rotationskörpers zusätzliche Dichtungen vorgesehen werden.

Als Antrieb sind Wellen, Keilriemen, Treibketten und Zahnrad- bzw. Reibradgetriebe geeignet. Die Keilriemenscheiben bzw. Zahnkränze können direkt am Aussenumfang des Rotationskörpers angebracht werden, wobei Zahn- bzw. Reibräder auch an der Innenseite des zylindermantelförmigen Rotationskörpers angreifen können.

Bevorzugt werden Antriebswellen verwendet, auf die der Rotationskörper aufsetzbar und mit diesen kuppelbar ist. Dabei ist es bevorzugt, den Rotationskörper direkt über eine als Drehteller ausgebildete, unmittelbar an das Teilchenbett anschliessende, Bodenplatte an die Antriebswelle zu kuppeln. Zu diesem Zweck weist der Drehteller an seiner Unterseite einen kurzen Fortsatz auf, der im wesentlichen die Form der Antriebswelle hat und an seinem Ende zu einer Büchse ausgeformt ist, die über die Antriebswelle fluchtend gestülpt werden kann, um das Drehmoment der Antriebswelle zu übernehmen. Für die Kopplung sind die bekannten Torsionsverbindungen und Sicherungsmassnahmen gegen Verdrehen für Wellen einsetzbar. Beispielsweise können starre Kopplungsverbindungen für miteinander fluchtende Wellen oder verzahnte Stirnseiten angewendet werden. Entscheidend ist, dass der Rotationskörper reversibel und einfach - ohne aufwendige Montagearbeiten - von der Antriebsachse abnehmbar ist und das Drehmoment zuverlässig übertragen wird. Weitere geeignete Kopplungsarten zwischen dem Rotationskörper und der Antriebswelle sind einem Fachmann bekannt und umfassen beispielsweise Steck-, Schnapp-, Bajonett-, Einrast- und Schraubverbindungen.

Die Antriebswelle kann an ihrem Kopplungsende in an sich bekannter Weise, z.B. zylindrisch, kegelig oder vielkantig, ausgebildet sein; der damit in Verbindung zu bringende Fortsatz des Drehtellers muss dann jeweils über eine dazu komplementär ausgebildete fluchtende Büchse verfügen. Es kann aber auch umgekehrt die Antriebswelle mit einer Büchse enden, in die ein komplementär geformetes Ende des Fortsatzses des Drehtellers passgenau eingreift.

Damit man den Rotationskörper auf dem Eluatauffangring abdichtend führen kann, muss die Gleitringdichtung zwischen dem rotierenden Drehteller und dem stationären Eluatauffangring stets unter dem gewünschten Anpressdruck stehen. Als Druckmittel kann das Eigengewicht des Rotationskörpers dienen. Es ist aber bevorzugt, dass eine oder mehrere Druck- bzw. vorgespannte Zugfedern eingesetzt werden. Während bei vorgespannten Zugfedern der Eluatauffangring in diese eingehängt wird, üben Druckfedern von unten den Anpressdruck auf den Eluatauffangring aus. Um die Federkraft gleichmässig über den Querschnitt des Eluatauffangrings zu verteilen, ist es vorteilhaft, Druckübertragungsstücke mit gegenüber den Federn vergrösserter Pressfläche zwischen Federn und Eluatauffangring vorzusehen.

Die Gleitringdichtung, der Eluatauffangring mit den darin eingebetteten Kammern zur Aufnahme der aus dem Teilchenbett austretenden Eluate, sowie die Kanäle in der Bodenplatte bzw. im Drehteller können in der eingangs beschriebenen, aus WO 99/12625 bekannten, Art und Weise ausgeführt sein. Im Rahmen der vorliegenden Erfindung ist es jedoch bevorzugt, das eingangs für die CAC-Vorrichtung aus WO 99/12625 beschriebene Problem der Druckschwankungen bzw. des Unterdrucks auf eine andere Weise als mit Hilfe von Druckausgleichsöffnungen in den Kammern des Auffangringes zu lösen.

Es hat sich nämlich überraschend gezeigt, dass durch die Verwendung von Schläuchen als Eluatableitungen für die Kammern des Eluatauffangrings, die man auf gegebenenfalls an den Kammern vorhandene Auslassstutzen aufstülpen kann, das Unterdruckproblem auch ohne Druckausgleichsöffnungen in den Kammern dann gelöst werden kann, wenn die Schläuche ausgehend von den Kammern bzw. Auslassstutzen so geführt werden, beispielsweise in wellenartiger Form ähnlich einem liegenden "S", dass sie einen Siphon bilden. Es ist dabei unerheblich, ob die Schläuche bzw. gegebenenfalls vorhandenen Auslassstutzen am Boden der Kammern angebracht sind und im wesentlichen vertikal nach unten weisen oder ob sie seitlich an der Aussenseite der Kammern angebracht sind und nach aussen und vorzugsweise schräg nach unten weisen.

Entscheidend für ein optimales Funktionieren der CAC-Vorrichtung ist in diesem Zusammenhang, dass zwischen dem Teilchenbett und den Siphonen der Ablaufschläuche eine durchgehende Flüssigkeitsverbindung im Sinne kommunizierender Gefässe entsteht, die trotz Rotation des Teilchenbetts während der gesamten Dauer der Elutions- und gegebenenfalls Wasch- und Regenerationsphasen erhalten bleibt. Aus diesem Grunde ist es auch nicht nötig, die Enden oder die höchstliegenden Teile der Ablaufschläuche auf einem Niveau unterhalb der Kammern des Auffangringes zu fixieren sondern sie können - und vorzugsweise sollen - auf ein Niveau oberhalb des Auffangringes angehoben und dort gehalten werden.

Neben der Eignung der Erfindung für eine Sterilisation im Autoklaven, hat der modulare Aufbau der Vorrichtung den Vorteil der einfachen Austauschbarkeit der gesamten Chromatographieeinheit. Auf diese Weise können je nach Art des Trennproblems fertig vorbereitete Rotationskörper als gesamte Chromatographieeinheiten (Module) ohne Zeitverzug nacheinander auf den Antrieb aufgesetzt werden, sodass während eines präparitven CAC-Vorganges parallel dazu bereits ein anderes Modul vorbereitet, z.B. befüllt und konditioniert, werden kann.

Es kann nicht nur derselbe Antriebsblock mit wechselnden Chromatographiemoduln betrieben werden, sondern es können auch die Zylinderhohlmäntel zur Aufnahme des Trennmediums und die Eluatauslässe den jeweiligen Chromatographieaufgaben angepasst werden. Beispielsweise können die Zylinderhohlmäntel bzw. Rotationskörper in Ihrer Länge bei gleichzeitiger Verwendung entsprechend unterschiedlich langer Distanzstäbe variiert werden. Ebenso eignet sich die Erfindung für Verbundkörper, bei denen mehrere Teilchenbetten übereinander bzw. nebeneinander gleichzeitig zur Trennung herangezogen werden, wie sie beispielsweise in der WO 99/47913 beschrieben sind. Der Grundgedanke und das Prinzip der vorliegenden Erfindung lässt sich ganz allgemein auf alle Varianten an Teilchenbetten und CAC-Vorrichtungen, wie sie in den internationalen Patentanmeldungen WO98/45699, WO99/12625, WO99/29388, WO99/28740 und WO99/47913 offenbart sind, sinngemäss anwenden. Unter dem Begriff "Teilchenbett" soll dabei nicht nur ein im Zylinderhohlmantel des Rotationskörpers angeordnetes, partikelförmiges Chromatographiegel oder -harz verstanden werden, sondern auch einstückiges ("monolithisches"), zur Flüssigchromatographie geeignetes Trennmedium, beispielsweise aus Keramik, Kunststoff (z.B. Blockpolymer), Fasermaterial und dergleichen. Der Begriff bezieht sich auch auf eine Kombination von zwei oder mehreren, gegebenenfalls schichtförmig übereinander angeordneten, vorzugsweise mit Trennschichten von einander separierten, chromatographischen Trennmedien, wie sie beispielsweise aus den vorgenannten Veröffentlichungen bekannt sind.

Nachfolgend wird die Erfindung anhand eines Ausführungsbeispiels unter Bezugnahme auf die Zeichnungen näher erläutert. Es zeigen:
- Fig. 1: einen längsseitigen Querschnitt durch die Rotationsachse einer CAC-Vorrichtung;
- Fig. 2: eine Detailansicht des Bodenbereichs der Vorrichtung aus Fig. 1 mit einer zusätzlich dargestellten, wellenförmig angeordneten Eluatableitung; und
- Fig. 3: eine graphische Darstellung des Ergebnisses eines Anreicherungsvorganges unter Verwendung der CAC-Vorrichtung.

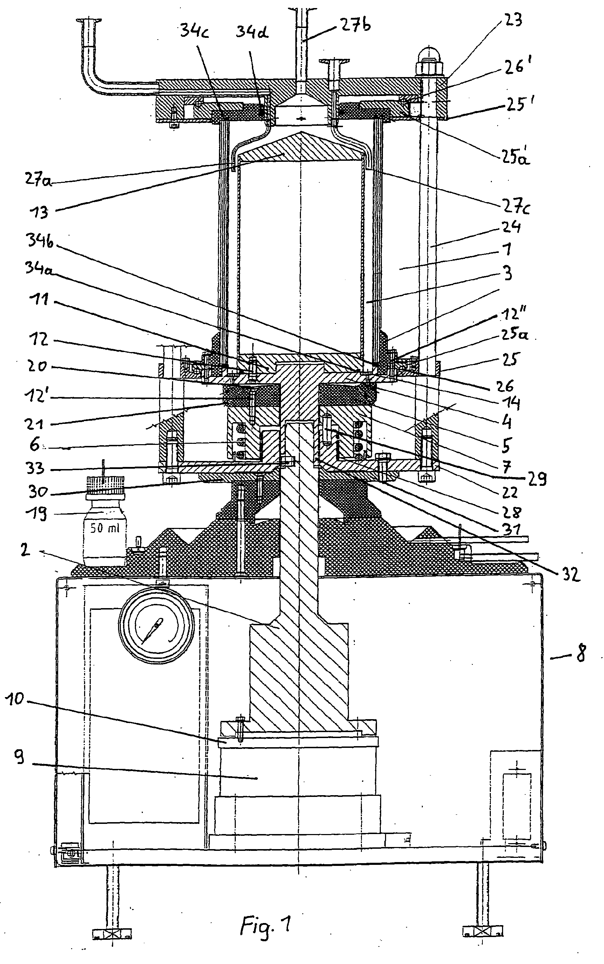

In der Figur 1 erkennt man einen Antriebsblock 8 mit der Antriebswelle 2, die mit einem Läufer 10 des Motors 9 verbunden ist. Auf die Antriebswelle 2 ist ein Rotationskörper 1 aufgesetzt.

Der Rotationskörper 1 ist nach aussen geschlossen und dient der annularen Chromatographie. Zur Aufnahme des Teilchenbetts ist am Rotationskörper 1 ein Zylinderhohlmantel als Teilchenbettraum 3 vorgesehen, der von einem Drehteller 4 getragen wird. In der dargestellten Ausführung ist der Zylinderhohlmantel von oben auf den Drehteller 4 aufgesetzt. Wie in diesem Beispiel gezeigt, kann der Innenzylinder des Zylinderhohlmantels unten mit einem Bodensockel 11 verbunden und über diesen mit einer Schraubenverbindung 12 am Drehteller 4 befestigt sowie oben mit einem Kegeldach 13 abgeschlossen sein. Zur Zentrierung und Stabilisierung des Innenzylinders kann der Drehteller 4 an seiner Oberseite eine zentrale Erhebung aufweisen, die fluchtend in eine komplementär ausgebildete Aussparung an der Unterseite des Bodensockels 11 eingreift. Für die kontaminationsfreie Prozessführung ist es von Vorteil, in den Fugen zwischen den Kontaktstellen der den Teilchenbettraum 3 begrenzenden Bauteile zusätzliche Abdichtungen 34a, 34b, 34c, 34d vorzusehen.

Zur Übertragung des Drehmoments der Antriebswelle 2 ist der Rotationskörper 1 mit der Antriebswelle 2 koppelbar. Dazu enthält der Drehteller 4 an seiner Unterseite einen Fortsatz, der im wesentlichen die Form eines mittleren Teilstücks der Antriebswelle 2 aufweist und an seinem Ende zu einer Büchse 32 ausgeformt ist, die über das freie, nach dem Schloss-Schlüssel-Prinzip komplementär zur Büchse 32 geformte Ende der Antriebswelle 2 fluchtend gestülpt werden kann. Gegen eine Verdrehung kann diese Kopplung durch einen seitlich angeordneten Stift 33 in der Antriebswelle 2 gesichert werden, der in eine entsprechende Ausnehmung der Büchse 32 eingreift. Es versteht sich von selbst, dass auch die umgekehrte Variante, bei der die Antriebswelle in einer Büchse endet, in welche ein komplementär geformter Fortsatz des Drehtellers 4 eingreift, geeignet ist und denselben Zweck erfüllt.

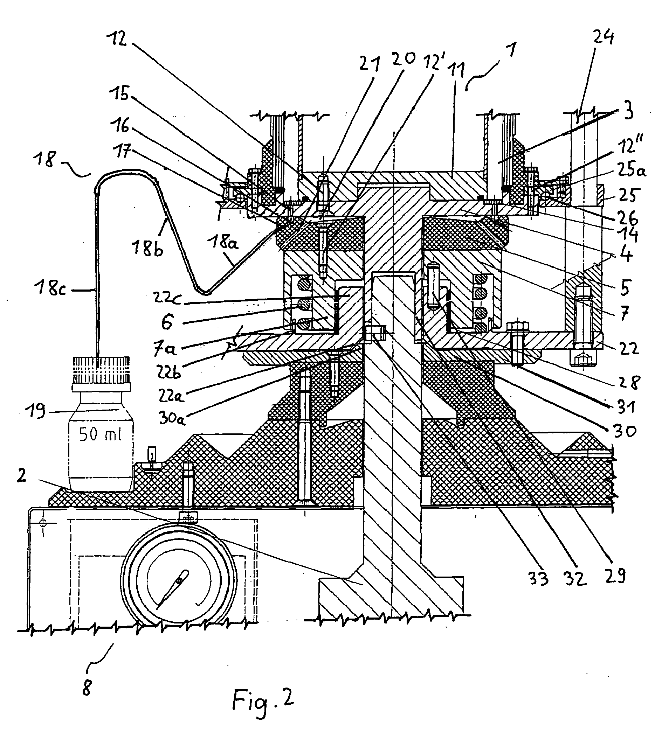

Ein Rückhaltestreifen oder -gitter 14, eingelegt im Drehteller 4 unterhalb des Teilchenbettraums 3, trägt das Teilchenbett und trennt es von den anschliessenden, vorzugsweise nach oben hin keilförmig erweiterten, Kanälen 15, die sich durch den Drehteller 4 hindurch erstrecken und die aus dem Teilchenbett austretenden Flüssigkeiten in die Kammern 16 (Fig. 2) des Eluatauffangrings 5 weiterleiten. Von den gegebenenfalls trichterförmig zulaufenden oder nach aussen hin abgeschrägten Böden der Kammern 16 des Eluatauffangrings 5 führen Auslasskanäle 17 (Fig. 2) aus dem Eluatauffangring hinaus, an welche Eluatableitungen 18 (Fig. 2) - in der Regel Kunststoffschläuche - angeschlossen sind, um - gegebenenfalls sterile - Verbindungen des Eluatauffangrings 5 zu Eluatsammelbehältern 19 herzustellen.

Bevorzugt werden die Eluatableitungen 18, wie in Figur 2 dargestellt, wellenförmig im Sinne eines liegenden "S" geführt, wobei zwischen einem zunächst abwärts geführten Teil 18a der Eluatableitung 18 und dem anschliessend nach oben gekrümmten Teil 18b eine Art Siphon gebildet wird und der nachfolgende, abermals nach unten gekrümmte Teil 18c in einen Eluatsammelbehälter 19 mündet. Diese Anordnung der Schläuche der Eluatableitungen 18 kann auf einfache Weise hergestellt werden, etwa durch Anheben der Schläuche mittels einer den Rotationskörper 1 ringförmig umgebenden, gegebenenfalls höhenverstellbaren, Halterung (in den Abbildungen nicht dargestellt).

Bei bestimmungsgemässem Betrieb der CAC-Vorrichtung bildet sich zwischen Teilchenbettraum 3 und jeder Eluatableitung 18 jeweils eine zusammenhängende Flüssigkeitssäule aus, die aufgrund der eingangs am Beispiel der WO99/12625 diskutierten, speziell aufeinander abgestimmten Geometrie der Kanäle 15 im Drehteller 4 und der Radialwände zwischen den Kammern 16 des Eluatauffangrings 5 nie vollständig abgeschnitten wird. Durch die Siphonbildung der Eluatableitungen 18 wird sichergestellt, dass die vom Teilchenbett ausgehende Flüssigkeitssäule stets wenigstens bis zum Siphon, gegebenenfalls bis zu der dem Siphon nachfolgenden, oberen Krümmung der wellenförmig angeordneten Eluatableitungen 18 reicht und damit ein gleichmässiger Eluatfluss aufrecht erhalten wird. Gleichzeitig wird dadurch verhindert, dass sich die Kammern 16 vollständig entleeren und ein Unterdruck durch allfälliges abruptes Entleeren der Kammern entstehen kann. Gegebenenfalls trotzdem auftretende, geringfügige Druckschwankungen werden durch die Flüssigkeitssäule in den Eluatableitungen 18 abgepuffert, sodass es in keiner Phase des Chromatographiebetriebs zum Ansaugen von (unsteriler) Fremdluft über die Gleitringdichtung kommen kann. Um eine kontaminationsfreie Eluatableitung zu ermöglichen, wird der Drehteller 4 abdichtend gleitend auf zwei konzentrischen Gleitflächen entlang des Umfangs des Eluatauffangrings 5 geführt, wobei zwischen den Gleitflächen die Kammern 16 angeordnet sind und der Eluatauffangring 5 durch eine Schraubenfeder 6 gegen den Drehteller 4 gedrückt wird. Die Schraubenfeder 6 ist mittig gelagert, sodass die Federwindungen um die Achse der Antriebswelle 2 herumlaufen. Sie überträgt den Federdruck über einen mit dem Eluatauffangring 5 durch eine Schraubenverbindung 12' verbundenen, als Druckübertragungsstück fungierenden, Druckklotz 7.

Zwischen der innen liegenden Gleitfläche und dem an die Antriebswelle grenzenden Innenrand enthält der Eluatauffangring 5 eine zum Aussenrand hin abgeschrägte, umlaufende Vertiefung, die mit der Unterseite des Drehtellers 4 einen Hohlraum 20 bildet, von dessen tiefstem Bereich eine oder mehrere Bohrungen 21 aus dem Eluatauffangring 5 hinaus führen. Der Hohlraum dient einerseits dazu, die Grösse der Gleitfäche zu begrenzen und andererseits dazu, eine Heissdampfsterilisation der Gleitflächen zu ermöglichen. Die Bohrungen 21 erlauben dabei, Kondenswasser aus diesem Bereich abzuleiten, welches sich während der Sterilisation oder dem Chromatographiebetrieb (z.B. bei Kühlung unter Raumtemperatur) angesammelt hat.

An dieser Stelle sei auch darauf hingewiesen, dass die CAC-Vorrichtung bevorzugt mit Mitteln zum Temperieren und/oder Thermostatisieren, insbesondere mit einem innerhalb und/oder ausserhalb des Rotationskörpers 1 angeordneten Heiz- und/oder Kühlkreislauf, ausgestattet ist, um je nach Chromatographieproblem und eingesetztem Ausgangsmaterial optimale Betriebsbedingungen durch Heizen oder Kühlen schaffen zu können. Die Temperierung kann beispielsweise mit Hilfe eines flüssigen Temperiermediums innerhalb des Innenzylinders des Rotationskörpers 1 und/oder mittels Wärmeisolation des Rotationskörpers nach aussen hin erfolgen. Der Innenzylinder kann auch als Doppelmantel ausgeführt sein, durch den das Temperiermedium geleitet wird.

Der Rotationskörper 1 mit Drehteller 4 ist mitsamt dem stationären Säulenkopf, dem Eluatauffangring 5 und dem Druckklotz 7 mit Schraubenfeder 6 zwischen einer unverdrehbaren Basisplatte 22 und einer unverdrehbaren Kopfplatte 23 eingespannt, die mit Distanzstäben 24 entlang ihres Umfangs miteinander verschraubt sind und von diesen im gewünschten Abstand gehalten werden. Längs der Distanzstäbe 24 ist etwa auf der Höhe des Drehtellers 4 eine Abstufung vorgesehen, die eine axiale Lagerschale 25 mit einer O-Ringdichtung 26 stützt, auf der ein über eine Schraubenverbindung 12" mit dem Drehteller 4 verbundener ringförmiger Lagerläufer 25a auflagert und gleitend geführt wird.

In die Kopfplatte 23 integriert oder mit dieser einstückig verbunden (wie am Beispiel der Fig. 1 dargestellt) ist der Säulenkopf mit darin angeordneten Materialzufuhrleitungen 27a, 27b, 27c für Feed, Eluenten, zum Beschicken mit Teilchenbettmaterial, etc., mit aus der Fermentationstechnik bekannten Sterilanschlüssen. Der den Teilchenbettraum 3 oben abschliessende Kopfteil des Rotationskörpers 1 wird in der Kopfplatte 23 durch ein weiteres Axialgleitlager über einen angebolzten, ringförmigen Lagerläufer 25a' über eine O-Ringdichtung 26' geführt, wobei die axiale Lagerschale 25' mit der unverdrehbaren Kopfplatte 23 fest verbunden ist.

Die Basisplatte 22 enthält eine zentrale Öffnung, deren Innendurchmesser etwa dem Durchmesser der Antriebswelle entspricht. Der Rand dieser zentralen Öffnung ist zu einem vertikal nach oben gerichteten Zylindermantel 22c ausgebildet, der mit seiner Innenfläche als Führungshülse für den Fortsatz 32 des Drehtellers 4 dient. An der Unterseite der Basisplatte 22 ist die Öffnung als Konus 22a erweitert, was das Aufsetzen des CAC-Moduls auf die Antriebswelle 2 wesentlich erleichtert. Der Zylindermantel 22c ist seinerseits von einer Gleitdichtungsmanschette 28 umgeben, die ein vertikales Justieren der Basisplatte 22 gegenüber dem Druckklotz 7 erleichtert. In die Kopfseite des Zylindermantels 22c ist ein Stift 29 eingesteckt, der den Druckklotz 7 gegen Verdrehung gegenüber der Basisplatte 22 sichert. Der Druckklotz 7 weist eine durchgehende, zentrale Bohrung auf, die in einem an den Eluatauffangring 5 angrenzenden Kopfbereich dem Durchmesser des Fortsatzes 32 und im daran anschliessenden Bereich dem Durchmesser des Zylindermantels 22c inklusive Manschette 28 entspricht, sodass er einerseits über den Fortsatz 32 des Drehtellers 4 und andererseits über die Manschette 28 und den Zylindermantel 22c der Basisplatte gestülpt werden kann. In einem peripheren Bereich 7a des Druckklotzes 7 ist eine ringförmige, nach unten hin offene Ausnehmung vorgesehen, die die Schraubenfeder 6 aufnimmt, wobei als Widerlager für die Schraubenfeder 6 die Basisplatte 23 fungiert Da der Druckklotz 7 an der Basisplatte 22 gesichert, aber nicht mit ihr fest verbunden ist, ist die Basisplatte 22 gegenüber diesem entlang der Manschette 28 vertikal verschiebbar bzw. justierbar, um allenfalls den Federdruck und damit den Anpressdruck der Gleitringdichtung zwischen Eluatauffangring 5 und Drehteller 4 zu variieren. Zur weiteren Sicherung ist die Bodenplatte 22 mit einem umlaufenden Vorsprung 22b versehen, der in die ringförmige Ausnehmung des Zylindermantels 7a hineinragt. Der Druckklotz 7 ist schliesslich mit dem Eluatauffangring durch eine Schraubenverbindung 12' fest verbunden.

Das CAC-Modul mit der zwischen Basisplatte 22 und Kopfplatte 23 eingespannten CAC-Vorrichtung mit Rotationskörper 1, Eluatauffangring 5, Druckklotz 7 und Schraubenfeder 6 ist auf einer Supportplatte 30 des Antriebsblocks 8 aufgesetzt. In der Supportplatte 30 ist eine zentrale Bohrung zum Durchführen der Antriebswelle 2 vorgesehen, deren Rand an der Oberseite als umlaufende Erhebung 30a, komplementär zum daran anschliessenden Konus 22a der Basisplatte 22, ausgebildet ist Nach Lösen der Schraubenverbindung 31 zwischen der Basisplatte 22 und der Supportplatte 30 kann das gesamte CAC-Modul einfach, gegebenenfalls mit Hilfe eines Krans, vom Antriebsblock 8 abgehoben und als solches autoklaviert oder durch ein anderes CAC-Modul ausgetauscht werden.

Die CAC-Vorrichtung eignet sich grundsätzlich für alle gängigen Trennprobleme, die mittels CAC oder P-CAC gelöst werden können, insbesondere für solche, wie sie beispielsweise in WO99/28740 beschrieben sind. Dies schliesst auch die Verwendung von verschiedensten Chromatographiegelen oder -harzen sowie Kombinationen solcher Harze und Gele ein, wie beispielsweise ebenfalls in WO99/28740 beschrieben. Auch die Verwendung monolithischen Trennmaterials (z.B. Blockpolymer) oder anderer, zur Flüssigchromatographie geeigneter Trennmedien soll damit umfasst sein. Bevorzugt eingesetzt wird die CAC-Vorrichtung für präparative Trenn-, Reinigungs- und/oder Konzentrierungszwecke von Einzelsubstanzen oder Gemischen organischer Substanzen, insbesondere von Proteinen oder Proteingemischen pflanzlicher, tierischer (inklusive humaner) oder biotechnologischer Herkunft (z.B. rekombinante Proteine), wie sie zum Teil bereits in WO99/28740 angeführt sind.

Dabei wird normalerweise das zu behandelnde Probenmaterial als Feed an einer Stelle punktuell in den Ringspalt des Zylinderhohlmantels in das Trennmedium (z.B. ein Teilchenbett aus Chromatographie-Gel) eingebracht und mittels Elutionsmitteln (z.B. Haupteluent und Stepeluenten) durch die stationäre Phase bewegt, wobei Adsorptions- und Desorptionsvorgänge stattfinden können. Der Haupteluent wird üblicherweise über den ganzen Ringspalt gleichmässig verteilt aufgebracht, beispielsweise über das Kegeldach, welches den Innenzylinder des Rotationskörpers nach oben hin abdeckt, während der oder die Stepeluenten in bestimmten Winkelabständen, anschliessend an den Probenfeed, über den Ringspalt verteilt ebenfalls punktuell aufgebracht werden. Neben den Zuläufen für Feed und Eluenten können ausserdem Zuläufe für Konditionierungsflüssigkeiten, insbesondere Wasch-, Regenerierungs- und/oder Hygienisierungsmittel ("sanitizing agents") vorhanden sein, die je nach Art der Behandlungsaufgabe und des Probenmaterials vor, zwischen und/oder nach den Eluenten-Inlets angeordnet sein können. Dies kann insbesondere für die Behandlung von biologischem Probenmaterial und der damit häufig verbundenen Anwesenheit zahlreicher unerwünschter Begleitsubstanzen einerseits und der Verderblichkeit und Infektionsanfälligkeit der organischen Komponenten (z.B. Proteine) andererseits von erheblichem Vorteil oder sogar unerlässlich sein. Dies umso mehr, wenn es sich um Material handelt, welches anschliessend für medizinische Zwecke an Menschen oder Tieren eingesetzt werden soll.

Nun hat sich herausgestellt, dass für manche Trenn-, Reinigungs- aber insbesondere Konzentrierungsaufgaben ein Verfahren günstig ist, bei dem die Zuläufe von Probenfeed und Haupteluent gegenüber dem herkömmlichen Verfahren vertauscht werden, d.h. in Umkehrung der üblichen Vorgangsweise nicht der Haupteluent über den gesamten Ringspalt verteilt aufgetragen wird, sondern das zu behandelnde Probenmaterial. Eine solche Vorgangsweise ist vor allem dann sinnvoll, wenn grosse Volumina an Probenmaterial durchgesetzt werden sollen, beispielsweise wenn ein pharmazeutischer Wirkstoff, der in nur sehr geringer Konzentration einer Lösung vorhanden ist, konzentriert und/oder von Begleitsubstanzen gereinigt werden soll.

Derartige Probleme lassen sich mit dieser "inversen" (auch als "Head-Space"-Methode bezeichneten) CAC-Methode auf wesentlich ökonomischere Weise bewerkstelligen als mit der traditionellen Verfahrensvariante, da beispielsweise die Elution durch leichte und schnelle Desorption in einem kleinen Winkelsegment bzw. in einer kleinen Zone erfolgen kann. Zur selektiven Desorption von am Trennmedium adsorbiertem Probenmaterial werden ein oder mehrere Stepeluenten-Inlets sowie gegebenenfalls weitere Zuläufe für Wasch-, Regenerierungs- und/oder Hygienisierungsmittel vor, zwischen und/oder nach den Eluenten-Inlets in vorbestimmten Winkelabständen im Säulenkopf angeordnet. Dabei ist gegebenenfalls zu beachten, dass im Falle von unmittelbar hintereinander durchzuführenden Elutions- und/oder Konditionierungsschritten (z.B. Wasch-, Regenerierungs- und/oder Hygienisierungsschritten) die jeweiligen Zuläufe für Elutions- und/oder Konditionierungsmittel so knapp nebeneinander angeordnet werden, dass dazwischen kein Probenmaterial in das Trennmedium eindringen kann. Ergänzend oder alternativ dazu können die Flussraten der Probenfeed- und Reinigungsmittelströme so aufeinander abgestimmt werden, dass derselbe Effekt erzielt wird.

Es ist zu diesem Zwecke bevorzugt, den Säulenkopf mit einer Vielzahl von in knappen Winkelabständen fix montierten Verlängerungsröhrchen für die Flüssigkeitszuleitungen auszustatten, von denen je nach Trennaufgabe jeweils nur ein Teil benutzt wird, während die anderen verschlossen werden.

Alternativ dazu wird in einer anderen Ausführungsform eine geringere Anzahl von Verlängerungsröhrchen an einem (in den Figuren nicht dargestellten) Führungsring oder einer ringförmigen Führungsschiene oberhalb des Ringspalts des Zylinderhohlmantels beweglich angebracht, sodass sie entlang dem Umfang des Ringes oder der Führungsschiene verschiebbar und an gewünschten Winkelpositionen über dem Teilchenbett fixierbar sind. Zu diesem Zweck können die Verlängerungsröhrchen auch geradlinig sein. Sie werden vorzugsweise durch den Führungsring oder die Führungsschiene vertikal hindurch geführt und mit Hilfe von beispielsweise aus der Gleitlagertechnik bekannten Gleit- oder Rollelementen, die an den Röhrchen befestigt sind, vom Führungsring oder von der Führungsschiene getragen.

Zur vertikalen Stabilisierung und zur unverrückbaren Fixierung an dem Führungsring oder der Führungsschiene können die Röhrchen mittels Schraub- oder Klemmverbindungen unterhalb oder oberhalb des Führungsringes oder der Führungsschiene oder beidseits festgeklemmt werden. Analog können auch andere geeignete Aufhängungssysteme für die Röhrchen eingesetzt werden, soweit sie die deren Verschiebbarkeit entlang dem Umfang des Ringspalts über dem Teilchenbett erlauben. Beispielsweise können die Röhrchen auch mit Hilfe von Ringen oder Ösen an einem einzelnen Führungsring oder zwei übereinander angeordneten Führungsringen beweglich aufgehängt und mit geeigneten Klemmverbindungen fixierbar sein. Die Führungsringe oder -schienen können auch Einrastpositionen aufweisen, an denen die Röhrchen ortsstabil fixiert werden können. Die Verbindung zwischen Röhrchen und Einlassöffnungen im Säulenkopf wird über flexible, gegebenenfalls armierte, Schläuche aus inertem Material (z.B. Kunststoff) hergestellt, die über Schlauchtüllen, Steck, Schnapp-, oder Schraubverschlüsse oder ähnliche lösbare Verbindungsmittel an den Röhrchen bzw. den Einlassöffnungen im Säulenkopf anschliessbar sind.

Die optimalen Bedingungen für die Wahl bzw. Einstellung der Winkelpositionen Winkelabstände der Verlängerungsröhrchen und/oder der Flussraten der zugeführten Flüssigkeitsströme können für jedes präparative Behandlungsproblem im Rahmen von Vorversuchen ermittelt werden. Dies soll an nachfolgendem Beispiel veranschaulicht werden:

### Beispiel: Anreicherung einer Proteinlösung mittels inverser P-CAC

Eine aus einer Fermentation zur mikrobiellen Herstellung von rekombinantem humanem Faktor VIII (abgekürzt: rFVIII) gewonnene, im wesentlichen partikelfreie, Lösung wird zur Konzentrierung des darin enthaltenen rFVIII unter Verwendung der CAC-Vorrichtung einer präparativen kontinuierlichen Annularchromatographie (P-CAC) unterworfen.

Es wird eine CAC-Vorrichtung verwendet, die einen Säulenkopf mit 7 Inlets aufweist: einen Haupteinlass, der das Probenmaterial über das Kegeldach des Innenzylinders auf den gesamten Ringspalt des Teilchenbetts (mit Ausnahme jener Zonen, wo Elutions- oder Konditioniermittel eingebracht werden) verteilt und gegebenenfalls den gesamten Kopfraum ("head-space") des Rotationskörpers mit Probenmaterial füllt, sowie je einen Einlass für Wasch- und Equilibrierlösung (150mM NaCl), Eluent (0,7M NaCl), Regenerierungsmittel (2M NaCl), Reinigungsmittel (Natriumlaurylsulfat) und Hygienisierungsmittel (1 M NaOH); ein Einlass bleibt in diesem Beispiel unbenutzt.

Als Teilchenbett im Zylinderhohlmantel des Rotationskörpers wird ein Poros DEAE Anionentauschergel (Hersteller: Perseptive Biosystems) eingesetzt und mit einer ca. 2 - 3 cm hohen Schicht aus Glasperlen bedeckt. Alle Einlässe ausser dem Haupteinlass sind mit entsprechend gekrümmten Verlängerungsröhrchen ausgestattet, die in die Glasperlenschicht eintauchen und ca. 0,5 bis 1,5 cm über dem Gelbett des Anionentauschers enden. Auf diese Weise wird verhindert, dass die aus den Verlängerungsröhrchen austretenden Flüssigkeitsströme direkt auf das Gelbett "schiessen" und dessen obersten Bereich aufwirbeln. Dennoch sind auch bei Verwendung von Glasperlen als Schutzschicht und Auftragshilfe den Flussraten der mittels der Verlängerungsröhrchen direkt in den Ringspalt einströmenden Flüssigkeiten relativ enge Grenzen gesetzt, sodass das Aufbringen des Probenfeeds über eines dieser Röhrchen einen geschwindigkeitsbestimmenden Schritt darstellen würde. Das Problem konnte durch die erfindungsgemässe Flutung des Kopfraums mit Probenfeed erfolgreich gelöst werden.

Zum Sterilisieren wird das fertig gepackte und mit deionisiertem Wasser oder gegebenenfalls Waschflüssigkeit gefüllte CAC-Modul an den Flüssigkeitszuleitungen des Säulenkopfs abgeklemmt oder vorzugsweise mit autoklavierbaren Membranen, insbesondere in Form entsprechender Schraub- oder Steckverbindungen, wie sie aus der Fermentationstechnik bekannt sind, dicht verschlossen. Ebenso werden die Schläuche der Eluatableitungen des Auffangringes, vorzugsweise 90 bis 180 an der Zahl, an ihren Enden dicht abgeklemmt. Sie können auch mit metallischen Kanülen ausgestattet sein, die ein aseptisches Verbinden der Schläuche mit steriliserten, gegebenenfalls eine Verschlussmembran enthaltenden Eluatsammelbehältern, beispielsweise durch Anstechen der Verschlussmembranen unter Flammenschutz, erleichtern. Die Kanülen können zum Zwecke des Autoklavierens ausserdem durch wiederverwendbare Schutzhülsen geschützt sein, sodass die mögliche Kontaminationsgefahr noch weiter reduziert wird.

Die stationäre Kopfplatte, die den Rotationskörper nach oben hin abschliesst, enthält noch mindestens eine weitere Öffnung, die dazu dient, den Druckausgleich im Rotationskörper während des Autoklavierens und danach in der Abkühlungsphase zu ermöglichen. Zu diesem Zeck wird die Öffnung mit einer autoklavierbaren, beidseitig luft- und feuchtigkeitsdurchgängigen Sterilfiltermembran, beispielsweise mit einer Porenweite von maximal 0,45 µm, oder alternativ dazu mit einem Tiefenfiltersystem (z.B. Glaswolle) abgedeckt. Derartige Druckausgleichssysteme sind ebenfalls hinlänglich aus der Fermentationstechnik bekannt. Zum Autoklavieren wird das gesamte CAC-Modul nach Lösen der Schraube(n) zwischen Basisplatte und Drehteller von der Antriebswelle des Motorantriebs, gegebenenfalls mit Hilfe eines mobilen Krans, abgehoben und in einen Autoklaven geeigneter Grösse eingestellt. Der anschliessende Autoklaviervorgang erfolgt in bekannter Weise. Für die meisten Anwendungszwecke der Praxis ist eine Haltedauer von 15 bis 20 Minuten bei 120°C (bei einem Druck von ca. 0,15 MPa (ca.1,5 atm) ausreichend.

P-CAC-Vorgang: Nach dem Autoklavieren, Abkühlen und aseptischen Anschliessen der Zuleitungen an die Pumpen und der Eluatableitungen an die Eluatsammelbehälter wurde die präparative kontinuierliche Annularchromatographie durch Zufuhr des Probenfeeds mit einer Flussrate von 80 ml/min gestartet. Die fünf Inlet-Verlängerungsröhrchen für Waschen/Equilibrieren, Eluieren, Regenerieren, Reinigen und Hygienisieren wurden so angeordnet, dass sie innerhalb eines einzigen Winkelsegments von 45 Grad in die Glasperlenschicht des Ringspalts mündeten, sodass sie im Bereich dieser Winkelpositionen das Eindringen des Probenmaterials in das Trennmedium behindert bzw. vollständig verhindert haben. Auf diese Weise konnte sichergestellt werden, dass nach der Elutionszone und zwischen den Konditionierungszonen kein Probenmaterial das Trennmedium verunreinigt

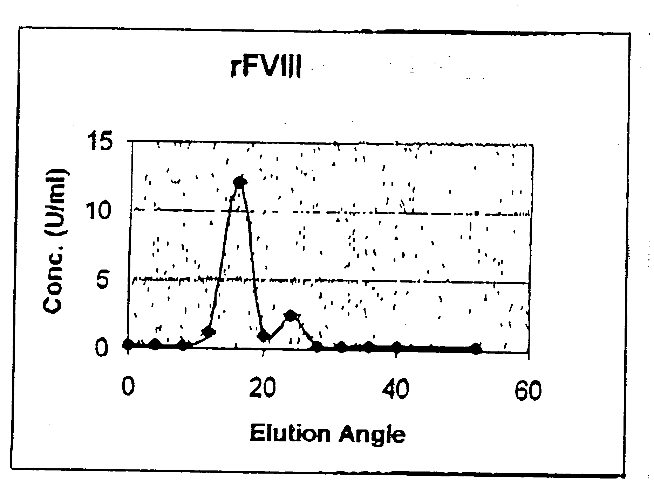

Die Flussrate für Waschen/Equilibrieren wurde auf 4 ml/min, die anderen wurden auf je 2 ml/min eingestellt. Als Rotationsgeschwindigkeit für den Rotationskörper wurde eine Winkelgeschwindigkeit von 120 Grad pro Stunde gewählt. Die Probenahme erfolgte nach ca. 1,25 Stunden. Trotz noch nicht optimaler Verfahrensbedingungen konnte eine Konzentrierung des rFVIII um den Faktor 13 erzielt werden (Fig. 3).

In einem weiteren Versuch wurden die Flussraten so geändert, dass der Probenfeed mit 100 ml/min, Waschen/Equilibrieren und Eluieren mit 3 ml/min sowie Regenerieren, Reinigen und Hygienisieren mit je 2 ml/min durchgeführt wurden. Bei einer Winkelgeschwindigkeit von 120 Grad pro Stunde und einer linearen Flussrate von 157 cm/h wurde mit dem Fraktionensammeln nach 3 Stunden begonnen. Es konnte eine Konzentrierung des Proteins um den Faktor 74 gegenüber der Ausgangslösung erzielt werden (Tab. 1).

**Tab. 1: Konzentrierung von rFVIII mittels P-CAC**

| Auslass-position | 1 | 2 | 3 | 4 | 5 | 6 | 7 | 8 | 9 |
|---|---|---|---|---|---|---|---|---|---|
| Titer [U/ml] | 0 | 74 | 24 | 9 | 0,3 | 2,3 | 0,3 | 0 | 0 |

Werte sind normiert auf Ausgangslösung = 0 U/ml

## Patentansprüche

1. Verfahren zur Reinigung, Trennung und/oder Konzentrierung von Substanzen mittels Flüssigchromatographie unter Verwendung einer Vorrichtung zur kontinuierlichen Annularchromatographie (CAC), **dadurch gekennzeichnet, dass** als Probenmaterial eine die Substanzen enthaltende Flüssigkeit über den gesamten Umfang eines in einem Zylinderhohlmantel eines Rotationskörpers befindlichen, chromatographischen Trennmediums gleichmässig verteilt aufgebracht wird, mit der Massgabe, dass Flüssigkeiten zum Eluieren der Substanzen und Konditionieren des Trennmediums punktuell an vorbestimmten Winkelpositionen auf das Trennmedium aufgebracht werden und im Bereich dieser Positionen das Eindringen des Probenmaterials in das Trennmedium behindert oder verhindert wird.

2. Verfahren nach Anspruch 1, **dadurch gekennzeichnet, dass** das Probenmaterial über einen zentralen Einlass in einem oberhalb des Trennmediums befindlichen Kopfbereich der CAC-Vorrichtung zugeführt und vorzugsweise der gesamte Kopfbereich mit dem Probenmaterial geflutet wird.

3. Verfahren nach Anspruch 1 oder 2, **dadurch gekennzeichnet, dass** die Elutions- und/oder Konditionierungsflüssigkeiten an Winkelpositionen über dem Trennmedium aufgebracht werden, die so gewählt sind, dass dazwischen kein Probenmaterial in das Trennmedium eindringen kann.

4. Verfahren nach einem der Ansprüche 1 bis 3, **dadurch gekennzeichnet, dass** das Probenmaterial organische Substanzen, insbesondere natürliche oder rekombinante Proteine oder Proteingemische, enthält und vorzugsweise zumindest eine Konditionierungsflüssigkeit zum Hygienisieren des Trennmediums eingesetzt wird.

5. Verfahren nach einem der Ansprüche 1 bis 4, **dadurch gekennzeichnet, dass** das Probenmaterial rekombinanten humanen Faktor VIII enthält und mit dem Verfahren eine Anreicherung des rhFVIII um ein Vielfaches der Ausgangskonzentration bewerkstelligt wird.
